# EUROPEAN PATENT APPLICATION

(11) **EP 4 631 835 A1**
(43) Date of publication of application: **15.10.2025**
(21) Application number: 25165622.9
(22) Date of filing: 24.03.2025
(51) Int. Cl.: B62J 45/20, B62J 50/21

(54) **CYCLOCOMPUTER**

(30) Priority: 08.04.2024 CN 202420703847 U
(71) Applicant: Guangdong Coros Sports Technology Co., Ltd, Dongguan, Guangdong 523808 (CN)
(72) Inventor: TANG, Yu, Dongguan, Guangdon 523808 (CN); WANG, Yuxiang, Dongguan, Guangdon 523808 (CN)
(74) Representative: Cabinet Didier Martin

(57) **Abstract**

- Cyclocomputer.

- The cyclocomputer includes a cyclocomputer body (100) and a cyclocomputer holder (200). The cyclocomputer body (100) is provided with an adjustment knob (110). The cyclocomputer holder (100) is configured to be connected to the cyclocomputer body (100) and is configured to mount the cyclocomputer on a handlebar. In the case where the cyclocomputer holder (100) is mounted on the handlebar, the adjustment knob (110) is configured to be operated by a finger of a user while the handlebar is held onto by the user.

- Smart devices, in particular cyclocomputers.

## Description

### TECHNICAL FIELD

The present disclosure relates to smart devices and, in particular, to a cyclocomputer.

### BACKGROUND

During cycling, to check different data during cycling, a user usually mounts a cyclocomputer on a bicycle. The cyclocomputer can display data such as cycling speed, cycling mileage, air pressure, and altitude. In actual use, the user often turns pages to check the different data.

Existing page-turning operations of the cyclocomputer are basically performed by keys. During cycling, the user uses a finger to press the key to turn pages, which is prone to bring certain safety hazards to cycling. Because the pressing operation requires the finger to apply a force in a direction different from the holding direction, this operation is prone to destroy the user's cycling balance.

In addition, user input operations during cycling, such as turning pages, require at least two keys (a page-up key and a page-down key), and the two keys require to be disposed at different positions on a cyclocomputer body. The length range of the user's finger suitable for pressing a key is fixed. Therefore, when the user's finger requires to trigger two keys, the position of the user's hand holding onto a bicycle handlebar requires to be moved. This movement is prone to bring safety hazards to cycling. Therefore, the cyclocomputer urgently requires a new ergonomic input key setting to achieve safe input operations for the user during cycling.

### SUMMARY

An object of the present disclosure is to provide a cyclocomputer that can enable a user to operate the cyclocomputer safely and conveniently during cycling.

To achieve the preceding technical effect, technical solutions of the present disclosure are described below.

The present disclosure provides a cyclocomputer. The cyclocomputer includes a cyclocomputer body provided with an adjustment knob; and a cyclocomputer holder capable of being connected to the cyclocomputer body and configured to mount the cyclocomputer on a handlebar, where in a case where the cyclocomputer holder is mounted on the handlebar, a user is also capable of operating the adjustment knob with a finger when holding onto the handlebar.

In some embodiments, the cyclocomputer holder includes a fitting portion that is in fit with the handlebar; a distance from the adjustment knob to the fitting portion is D1, and D1 satisfies a relationship equation that 4 cm ≤ D1 ≤ 6 cm.

In some embodiments, the cyclocomputer body includes a first sidewall, a second sidewall, and a third sidewall, where the adjustment knob is disposed on the second sidewall, the first sidewall and the second sidewall are disposed opposite to each other, two ends of the third sidewall are connected to the first sidewall and the second sidewall respectively, and the third sidewall is parallel to a rotation axis of the adjustment knob.

In some specific embodiments, a distance from the third sidewall to the adjustment knob is D2, and D2 satisfies a relationship equation that 3 cm ≤ D2 ≤ 4 cm.

In some specific embodiments, the cyclocomputer holder includes a fitting portion that is in fit with the handlebar; a distance from the third sidewall to the fitting portion is D3, and D3 satisfies a relationship equation that 1 cm ≤ D3 ≤ 2 cm.

In some embodiments, an outer peripheral surface of the adjustment knob is provided with a plurality of non-slip structures that are spaced apart in a circumferential direction of the adjustment knob.

In some embodiments, the cyclocomputer holder includes a fitting hole that is in fit with the handlebar and a support surface configured to support the cyclocomputer body.

In some specific embodiments, the cyclocomputer body includes a display surface, a central axis of the fitting hole is parallel to the support surface, and the support surface is parallel to the display surface.

In some specific embodiments, the cyclocomputer holder includes a first frame and a second frame, where one end of the second frame is rotatably disposed on the first frame, and an other end of the second frame is detachably connected to the first frame.

In some specific embodiments, the first frame and the second frame are both provided with half holes, where the two half holes are encircled to form the fitting hole.

Additional aspects and advantages of the present disclosure are partially set forth in the following description and partially apparent from the following description or are learned through the practice of the present disclosure.

### BRIEF DESCRIPTION OF DRAWINGS

FIG. 1 is a view illustrating the dimension structure of a cyclocomputer according to an embodiment of the present disclosure.
FIG. 2 is another view illustrating the dimension structure of a cyclocomputer according to an embodiment of the present disclosure.
FIG. 3 is a view illustrating the exploded structure of a cyclocomputer according to an embodiment of the present disclosure.
FIG. 4 is a view illustrating the back structure of a cyclocomputer body according to an embodiment of the present disclosure.

### Reference list

- 100: cyclocomputer body
- 110: adjustment knob
- 120: first sidewall
- 130: second sidewall
- 140: third sidewall
- 150: display surface
- 160: protruding portion
- 161: limit groove
- 170: flange
- 200: cyclocomputer holder
- 210: first frame
- 220: second frame
- 201: fitting hole
- 202: support surface
- 203: fastening column
- 204: limit plate
- 260: second limit hole
- 300: securing plate
- 310: mounting groove
- 320: notch
- 330: rib
- 340: fastening hole
- 350: limit protrusion
- 400: fastener

### DETAILED DESCRIPTION

To make the technical problems solved, the technical solutions used, and the technical effects achieved in the present disclosure more apparent, the technical solutions of the present disclosure are further described below in conjunction with drawings and embodiments.

In the description of the present disclosure, it is to be understood that orientations or position relations indicated by terms such as "center", "longitudinal", "lateral", "length", "width", "thickness", "above", "below", "front", "back", "left", "right", "vertical", "horizontal", "top", "bottom", "inside", "outside", "clockwise", "counterclockwise", "axial", "radial", and "circumferential" are based on orientations or position relations shown in the drawings. These orientations or position relations are intended only to facilitate the description of the present disclosure and simplify the description and not to indicate or imply that an apparatus or element referred to must have such specific orientations or must be configured or operated in such specific orientations. Thus, these orientations or position relations are not to be construed as limiting the present disclosure.

In addition, a feature defined as a "first" feature or a "second" feature may explicitly or implicitly include one or more of such features to distinguish and describe the features regardless of order or weight. In the description of the present disclosure, unless otherwise noted, "multiple" means two or more.

In the description of the present disclosure, it is to be noted that, unless otherwise expressly specified and limited, the term "mounting", "connected to each other", or "connected" is to be construed in a broad sense, for example, as securely connected, detachably connected, or integrally connected; mechanically connected or electrically connected; directly connected to each other or indirectly connected to each other via an intermediary; or internally connected between two elements. For those of ordinary skill in the art, specific meanings of the preceding terms in the present disclosure may be understood based on specific situations.

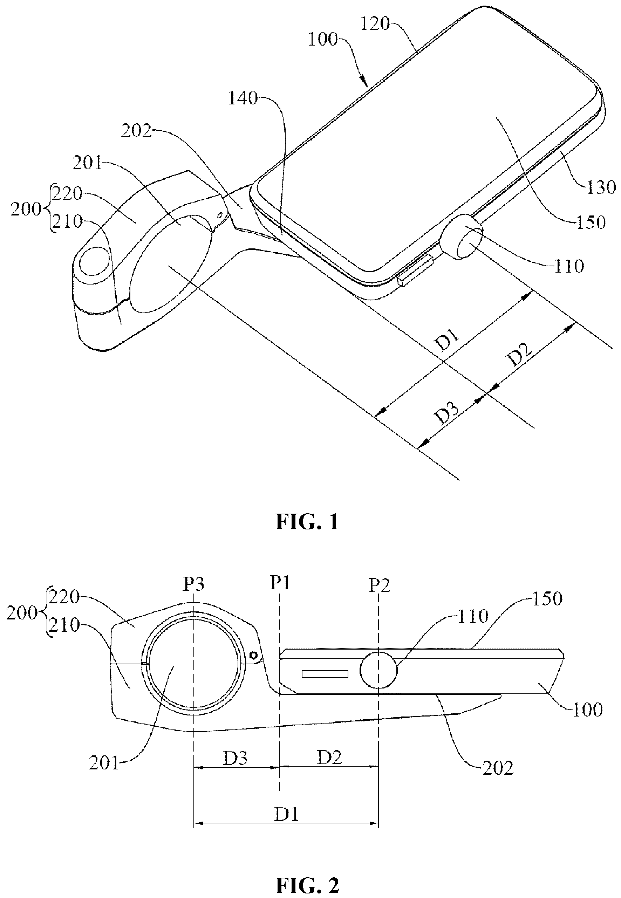

The specific structure of a cyclocomputer of embodiments of the present disclosure is described below with reference to FIG. 1.

The present disclosure provides a cyclocomputer. As shown in FIG. 1, the cyclocomputer of the present disclosure includes a cyclocomputer body 100 and a cyclocomputer holder 200. The cyclocomputer body 100 is provided with an adjustment knob 110. The cyclocomputer holder 200 can be connected to the cyclocomputer body 100 and is configured to mount the cyclocomputer on a handlebar. In the case where the cyclocomputer holder 200 is mounted on the handlebar, a user can also operate the adjustment knob 110 with a finger while holding onto the handlebar. It is to be understood that in actual use, after the user mounts the cyclocomputer holder 200 on the handlebar, since the cyclocomputer body 100 is provided with the adjustment knob 110, when the user needs to check specific parameters and thereby needs to turn pages, the user only needs to rotate the adjustment knob 110. Specifically, the user rotates the adjustment knob 110 upward with the finger to fulfill the function of page up; the user rotates the adjustment knob 110 downward with the finger to fulfill the function of page down. Compared with the operation manner of the page-up key and the page-down key in the related art, the adjustment knob 110 used in the present disclosure does not require a large force for the user to fulfill the page-turning function; and since one adjustment knob 110 can fulfill two different functions of page up and page down at the same time, the user does not need to move the position of holding onto the bicycle handlebar when turning a page up or down. Therefore, the operation is more convenient.

It is to be noted that since the cyclocomputer holder 200 is mounted on the handlebar, the user can also operate the adjustment knob 110 with the finger while holding onto the handlebar; the user does not apply a force perpendicular to the holding direction during the rotation of the adjustment knob 110 so that the user's cycling balance can be ensured, thereby improving the safety performance of cycling.

In some embodiments, as shown in FIG. 1, the cyclocomputer body 100 includes a first sidewall 120, a second sidewall 130, and a third sidewall 140; the adjustment knob 110 is disposed on the second sidewall 130, the first sidewall 120 and the second sidewall 130 are disposed opposite to each other, two ends of the third sidewall 140 are connected to the first sidewall 120 and the second sidewall 130 respectively, and the third sidewall 140 is parallel to the adjustment knob 110. It is to be understood that when the cyclocomputer is mounted on the handlebar, the third sidewall 140 is basically parallel to the axis of the handlebar and the adjustment knob 110 so that the adjustment knob 110 can be basically parallel to the axis of the handlebar. In this manner, the user does not apply the force perpendicular to the holding direction during the rotation of the adjustment knob 110 so that the user's cycling balance can be ensured, thereby improving the safety performance of cycling.

In some embodiments, the cyclocomputer holder 200 includes a fitting portion that is in fit with the handlebar; the distance from the adjustment knob 110 to the fitting portion is D1, and D1 satisfies a relationship equation that 4 cm ≤ D1 ≤ 6 cm. It is to be noted that the specific setting manner of the distance D1 varies with different shapes of the fitting portion and different specific design references. For example, as shown in FIG. 1, the fitting portion is a fitting hole 201, and D1 is the distance from the central axis of the fitting hole 201 to the rotation axis of the adjustment knob 110. For another example, as shown in FIG. 2, the third sidewall 140 of the cyclocomputer body 100 is used as the reference plane P1, the plane passing through the rotation axis of the adjustment knob 110 and parallel to the reference plane P1 is defined as the design plane P2, the plane passing through the central axis of the fitting hole 201 and parallel to the reference plane P1 is defined as the design plane P3, and D1 is the distance from the design plane P2 to the design plane P3.

In an alternative embodiment, D1 may also be the minimum distance from the outer peripheral surface of the fitting hole 201 to the rotation axis of the adjustment knob 110.

In an alternative embodiment, the fitting portion is a claw, and the distance in this case is the distance from the outer wall of a claw portion closest to the cyclocomputer body 100 to the rotation axis of the adjustment knob 110.

It is to be understood that in the actual working process, when the user needs to operate the cyclocomputer, the adjustment knob 110 may be triggered by an index finger. During cycling, the user's palm is always in the state of holding onto the handlebar. Therefore, to trigger the adjustment knob 110 conveniently and safely, the length of the user's index finger in this case should just allow the user to trigger the adjustment knob 110. Based on this, the distance range between the adjustment knob 110 and the handlebar may be calculated according to the length range of the index finger. The distance from the adjustment knob 110 to the handlebar may also be represented by the distance from the fitting portion to the adjustment knob 110. According to statistical data, the length of a human finger is between 6 cm and 9 cm. Controlling D1 between 4 cm and 6 cm can make it easier for the user to operate the adjustment knob 110 with the index finger.

Optionally, the value of D1 may be 4 cm, 4.1 cm, 4.2 cm, 4.3 cm, 4.4 cm, 4.5 cm, 4.6 cm, 4.7 cm, 4.8 cm, 4.9 cm, 5 cm, 5.1 cm, 5.2 cm, 5.3 cm, 5.4 cm, 5.5 cm, 5.6 cm, 5.7 cm, 5.8 cm, 5.9 cm, or 6 cm. Certainly, the value of D1 may also be another value according to actual requirements and is not limited to the preceding example values.

In some embodiments, as shown in FIGS. 1 and 2, the distance from the third sidewall 140 to the adjustment knob 110 is D2, and D2 satisfies a relationship equation that 3 cm ≤ D2 ≤ 4 cm. It is to be understood that a too large or too small distance from the third sidewall 140 to the adjustment knob 110 does not facilitate the user's operation. In this embodiment, D2 is between 3 cm and 4 cm, which can better conform to ergonomics and facilitate the user's operation. It is to be noted that D2 may be determined in two manners. The first one is shown in FIG. 1, where D2 is the distance from the rotation axis of the adjustment knob 110 to the bottom edge of the third sidewall 140. The second one is shown in FIG. 2, where the third sidewall 140 of the cyclocomputer body 100 is used as the reference plane P1, the plane passing through the rotation axis of the adjustment knob 110 and parallel to the reference plane P1 is defined as the design plane P2, and D2 is the distance from the reference plane P1 to the design plane P2.

Optionally, the value of D2 may be 3 cm, 3.1 cm, 3.2 cm, 3.3 cm, 3.4 cm, 3.5 cm, 3.6 cm, 3.7 cm, 3.8 cm, 3.9 cm, or 4 cm. Certainly, the value of D2 may also be another value according to actual requirements and is not limited to the preceding example values.

In some specific embodiments, as shown in FIG. 1, the cyclocomputer holder 200 includes a fitting portion that is in fit with the handlebar; the distance from the third sidewall 140 to the fitting portion is D3, and D3 satisfies a relationship equation that 1 cm ≤ D3 ≤ 2 cm. The specific setting manner of the distance D3 varies with different shapes of the fitting portion. It is to be noted that the specific setting manner of the distance D3 varies with different shapes of the fitting portion and different specific design references. For example, as shown in FIG. 1, the fitting portion is a fitting hole 201, and D3 is the distance from the central axis of the fitting hole 201 to the bottom edge of the third sidewall 140. For another example, as shown in FIG. 2, the third sidewall 140 of the cyclocomputer body 100 is used as the reference plane P1, the plane passing through the central axis of the fitting hole 201 and parallel to the reference plane P1 is defined as the design plane P3, and D3 is the distance from the design plane P1 to the design plane P3.

In some alternative embodiments, the distance D3 may also be the minimum distance from the outer peripheral surface of the fitting hole 201 to the third sidewall 140.

In an alternative embodiment, the fitting portion is a claw, and the distance D3 in this case is the distance from the outer wall of a claw portion closest to the cyclocomputer body 100 to the third sidewall 140. It is to be understood that if D3 is too small, the third sidewall 140 is too close to the handlebar, which is prone to accidentally touch the cyclocomputer body 100 during cycling; if D3 is too large, the third sidewall 140 is too far from the handlebar, which increases the possibility of shaking the cyclocomputer body 100. In this embodiment, D3 is between 1 cm and 2 cm, which can not only avoid accidentally touching the cyclocomputer body 100 during cycling, but also improve the stability of the cyclocomputer body 100 and reduce the possibility of shaking the cyclocomputer body 100.

Optionally, the value of D3 may be 1 cm, 1.1 cm, 1.2 cm, 1.3 cm, 1.4 cm, 1.5 cm, 1.6 cm, 1.7 cm, 1.8 cm, 1.9 cm, or 2 cm. Certainly, the value of D3 may also be another value according to actual requirements and is not limited to the preceding example values.

In some embodiments, the outer peripheral surface of the adjustment knob 110 is provided with multiple non-slip structures that are spaced apart in the circumferential direction of the adjustment knob 110. It is to be understood that the multiple non-slip structures can facilitate the operation of the adjustment knob 110 by the user and reduce the slipping phenomenon when the user operates the adjustment knob 110. In the embodiments of the present disclosure, the multiple non-slip structures may be selected according to actual requirements. For example, in some embodiments, the multiple non-slip structures may be multiple non-slip protrusions formed on the adjustment knob 110; in some embodiments, the multiple non-slip structures may be multiple non-slip grooves formed on the adjustment knob 110; in some embodiments, the multiple non-slip structures are formed as a non-slip layer wrapped on the outer peripheral surface of the adjustment knob 110.

In some embodiments, as shown in FIG. 1, the cyclocomputer holder 200 includes a fitting hole 201 that is in fit with the handlebar and a support surface 202 configured to support the cyclocomputer body 100. It is to be understood that in the actual working process, the fitting hole 201 of the cyclocomputer holder 200 may be inserted into the handlebar, which is convenient for the user to mount the cyclocomputer holder 200; the support surface 202 disposed on the cyclocomputer holder 200 can increase the contact area between the cyclocomputer holder 200 and the cyclocomputer body 100 and improve the stability of the cyclocomputer body 100.

In some specific embodiments, as shown in FIG. 1, the cyclocomputer body 100 includes a display surface 150, the central axis of the fitting hole 201 is parallel to the support surface 202, and the support surface 202 is parallel to the display surface 150. It is to be understood that this can enable the cyclocomputer body 100 to be basically parallel to the axis of the handlebar, which is convenient for the user to check the display surface 150 of the cyclocomputer body 100.

In some specific embodiments, as shown in FIG. 1, the cyclocomputer holder 200 includes a first frame 210 and a second frame 220; one end of the second frame 220 is rotatably disposed on the first frame 210, and the other end of the second frame 220 is detachably connected to the first frame 210. It is to be understood that compared with the integrally molded cyclocomputer holder 200, the cyclocomputer holder 200 split into the first frame 210 and the second frame 220 is more convenient to mount. In the actual mounting process, the first frame 210 and the cyclocomputer body 100 are first assembled and then placed on the designated position of the handlebar, then the second frame 220 is rotated to contact the handlebar, and finally the second frame 220 is secured to the first frame 210 (a securing manner may be a hook-and-loop fastener, or may also be a structure such as a securing pin, or a securing screw).

In some specific embodiments, as shown in FIG. 1, the first frame 210 and the second frame 220 are both provided with half holes, and the two half holes are encircled to form the fitting hole 201. Therefore, the first frame 210 and the second frame 220 can be firmly secured to the handlebar.

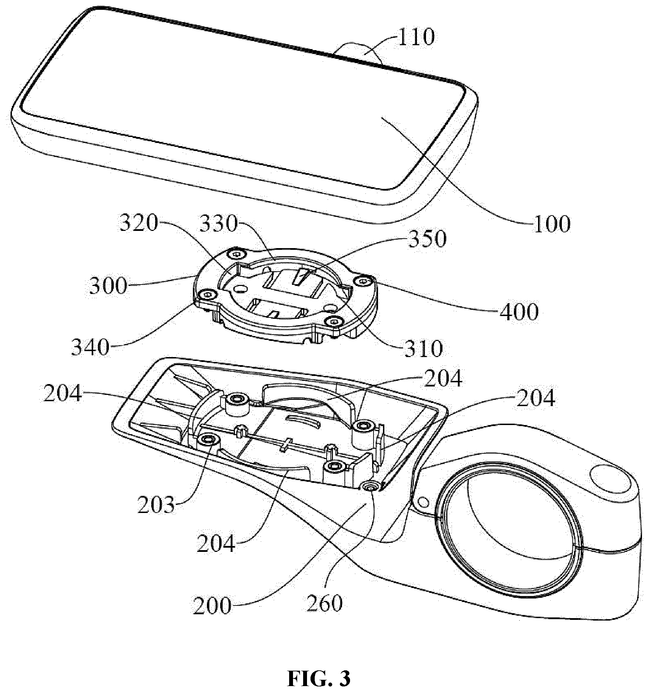

In some embodiments, as shown in FIG. 3, the cyclocomputer further includes a securing plate 300 that is mounted on the cyclocomputer holder 200 by fasteners 400, the back surface (the surface relative to the display surface 150) of the cyclocomputer body 100 is provided with a protruding portion 160, and the securing plate 300 is formed with a mounting groove 310 to be in fit with the protruding portion 160. It is to be understood that in the actual assembly process, after the securing plate 300 is mounted on the cyclocomputer holder 200, the cyclocomputer body 100 is directly placed on the securing plate 300 so that the protruding portion 160 can be in fit with the mounting groove 310, that is, the positioning of the cyclocomputer body 100 can be completed. Therefore, the cyclocomputer body 100 can be mounted on the cyclocomputer holder 200 more conveniently.

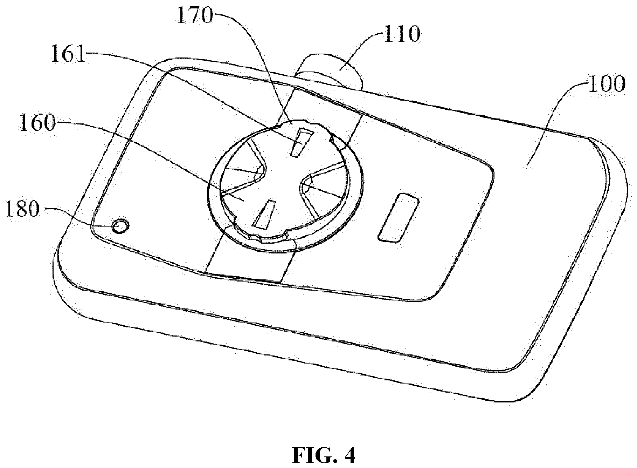

In some specific embodiments, as shown in FIGS. 3 and 4, the protruding portion 160 is provided with two flanges 170 opposite to each other, and the thickness of each flange 170 is smaller than the thickness of the protruding portion 160. The inner peripheral wall of the mounting groove 310 is provided with a rib 330 extending in the axial direction of the mounting groove 310, and the rib 330 is spaced apart from the bottom wall of the mounting groove 310. The mounting groove 310 further includes notches 320 corresponding to the two flanges 170 respectively, and the notches 320 pass through the rib 330. In the actual mounting process, the two flanges 170 are aligned with the notches 320, the protruding portion 160 is inserted into the mounting groove 310, and then the entire cyclocomputer body 100 is rotated so that the top walls of the two flanges 170 can stop against the bottom wall of the rib 330. Therefore, after the cyclocomputer body 100 is mounted on the cyclocomputer holder 200, due to the limit effect of the two flanges 170 and the rib 330, the cyclocomputer body 100 cannot be bumped out of the mounting groove 310 in the depth direction of the mounting groove 310 due to bumps, further improving the mounting stability of the cyclocomputer body 100 and the cyclocomputer holder 200.

In some optional embodiments, as shown in FIGS. 3 and 4, the bottom wall of the mounting groove 310 is provided with limit protrusions 350, and the protruding portion 160 is formed with limit grooves 161 that are in fit with the limit protrusions 350 respectively. It is to be understood that the cyclocomputer body 100 requires to be rotated according to the preceding content during the mounting process. When the cyclocomputer body 100 is rotated so that the limit protrusions 350 can be in fit with the limit grooves 161, the cyclocomputer body 100 cannot continue being rotated, thereby further improving the mounting stability of the cyclocomputer body 100 and the cyclocomputer holder 200. It is to be noted that if the cyclocomputer body 100 requires to be dismantled, the cyclocomputer body 100 is slightly lifted so that the limit protrusions 350 can be disengaged from the limit grooves 161, then the cyclocomputer body 100 is rotated so that the two flanges 170 can be aligned with the notches 320, and finally the entire cyclocomputer body 100 is lifted out of the mounting groove 310.

Optionally, the side surface of each limit protrusion 350 is not perpendicular to the bottom wall of the mounting groove 310, and the width of each limit protrusion 350 gradually increases from bottom to top. It is to be understood that the limit protrusions 350 each are formed in a wedge shape, and when the cyclocomputer body 100 requires to be dismantled, due to the guide effect of the sidewall, when the cyclocomputer body 100 is rotated, the limit protrusions 350 can also be disengaged from the limit grooves 161, without lifting the cyclocomputer body 100, further facilitating the dismantling of the cyclocomputer body 100.

Optionally, a deformation groove is formed at the connection joint between the sidewall of the mounting groove 310 and the bottom wall of the mounting groove 310 so that the bottom wall of the mounting groove 310 can be deformed under the action of pressure. Therefore, when the cyclocomputer body 100 is rotated, the bottom wall of the mounting groove 310 can be extruded and deformed so that the limit protrusions 350 can be smoothly clamped in the limit grooves 161. After the limit protrusions 350 are clamped in the limit grooves 161, the bottom wall of the mounting groove 310 can rebound, thereby continuously providing the limit protrusions 350 with a force to abut against the limit grooves 161 so as to prevent the limit protrusions 350 from being disengaged from the limit grooves 161.

Optionally, the protruding portion 160 is an elastic member with certain elasticity. When the cyclocomputer body 100 is rotated, the protruding portion 160 is extruded and deformed so that the limit protrusions 350 can be smoothly clamped in the limit grooves 161. After the limit protrusions 350 are clamped in the limit grooves 161, the protruding portion 160 rebounds and tightly fits the bottom wall of the mounting groove 310 to prevent the limit protrusions 350 from being disengaged from the limit grooves 161.

In some specific embodiments, as shown in FIG. 3, the securing plate 300 is provided with multiple fastening holes 340 spaced apart along the contour line of the securing plate 300, the cyclocomputer holder 200 is provided with fastening columns 203 that are in fit with the multiple fastening holes 340 respectively, the fasteners 400 are screws, and the fastening columns 203 are provided with threaded holes that are in fit with the screws respectively. It is to be understood that in the actual assembly process, the securing plate 300 is mounted on the cyclocomputer holder 200 so that the fastening columns 203 can be disposed in one-to-one correspondence with the multiple fastening holes 340, and then the screws pass through the multiple fastening holes 340 and are screwed into the threaded holes. The connection by screws can not only improve the stability of the securing plate 300 and the cyclocomputer holder 200, but also facilitate the mounting and dismantling of the securing plate 300 and the cyclocomputer holder 200.

In some optional embodiments, as shown in FIG. 4, the cyclocomputer holder 200 is further provided with multiple limit plates 204, the securing plate 300 is mounted on the cyclocomputer holder 200, and the multiple limit plates 204 can stop against the outer peripheral wall of the securing plate 300. It is to be understood that in the actual assembly process, when being placed on the cyclocomputer holder 200, the securing plate 300 may be directly placed within the space defined by the multiple limit plates 204, and after the securing plate 300 is placed, the fastening columns 203 are naturally disposed in one-to-one correspondence with the multiple fastening holes 340. The multiple limit plates 204 play a role in pre-positioning the securing plate 300, which facilitates the securing mounting.

In some embodiments, as shown in FIGS. 3 and 4, the cyclocomputer body 100 further includes a first limit hole 180, and the cyclocomputer holder 200 further includes a second limit hole 260. When the cyclocomputer body 100 is rotated so that the limit protrusions 350 are in fit with the limit grooves 161 respectively, the first limit hole 180 can be aligned with the second limit hole 260 so that a limit member (not shown) can enter the first limit hole 180 through the second limit hole 260, thereby further limiting the rotation of the cyclocomputer body 100 relative to the cyclocomputer holder 200. In this manner, the cyclocomputer body 100 can be prevented from being removed from the cyclocomputer holder 200, thereby playing an anti-theft role.

In some embodiments, the limit member is a screw, and the inner side of the first limit hole 180 includes a threaded structure. When the first limit hole 180 can be aligned with the second limit hole 260, the screw can pass through the second limit hole 260 and rotate relative to the first limit hole 180, thereby securing the cyclocomputer holder 200 to the cyclocomputer body 100.

In some embodiments, the inner side of the second limit hole 260 includes a threaded structure. When the first limit hole 180 can be aligned with the second limit hole 260, the screw can rotate relative to the second limit hole 260, thereby extending from the second limit hole 260 into the first limit hole 180.

In the description of the Specification, the description of reference terms such as "some embodiments" and "other embodiments" is intended to mean that specific features, structures, materials, or characteristics described in conjunction with such embodiments or examples are included in at least one embodiment or example of the present disclosure. In the Specification, the illustrative description of the preceding terms does not necessarily refer to the same embodiments or examples. Moreover, the described specific features, structures, materials, or characteristics may be combined appropriately in any one or more embodiments or examples.

The preceding are only preferred embodiments of the present disclosure. Those of ordinary skill in the art make modifications in the specific embodiments and application scope according to the present disclosure. The content of the Specification is not to be construed as limiting the present disclosure.

## Claims

1. A cyclocomputer, comprising:
a cyclocomputer body (100) provided with an adjustment knob (110); and
a cyclocomputer holder (200) configured to be connected to the cyclocomputer body (100) and configured to mount the cyclocomputer on a handlebar,
wherein in a case where the cyclocomputer holder (200) is mounted on the handlebar, the adjustment knob (110) is configured to be operated by a finger of a user while the handlebar is held onto by the user.

2. The cyclocomputer of claim 1, wherein the cyclocomputer holder (200) comprises a fitting portion that is in fit with the handlebar; a distance from the adjustment knob (110) to the fitting portion is D1, and D1 satisfies a relationship equation that 4 cm ≤ D1 ≤ 6 cm.

3. The cyclocomputer of claim 1, wherein the cyclocomputer body (100) comprises a first sidewall (120), a second sidewall (130), and a third sidewall (140), wherein the adjustment knob (110) is disposed on the second sidewall (130), the first sidewall (120) and the second sidewall (130) are disposed opposite to each other, two ends of the third sidewall (140) are connected to the first sidewall (120) and the second sidewall (130) respectively, and the third sidewall (140) is parallel to a rotation axis of the adjustment knob (110).

4. The cyclocomputer of claim 3, wherein a distance from the third sidewall (140) to the adjustment knob (110) is D2, and D2 satisfies a relationship equation that 3 cm ≤ D2 ≤ 4 cm.

5. The cyclocomputer of claim 4, wherein the cyclocomputer holder (200) comprises a fitting portion that is in fit with the handlebar; a distance from the third sidewall (140) to the fitting portion is D3, and D3 satisfies a relationship equation that 1 cm ≤ D3 ≤ 2 cm.

6. The cyclocomputer of any one of claims 1 to 5, wherein an outer peripheral surface of the adjustment knob (110) is provided with a plurality of non-slip structures that are spaced apart in a circumferential direction of the adjustment knob (110).

7. The cyclocomputer of any one of claims 1 to 5, wherein the cyclocomputer holder (200) comprises a fitting hole (201) that is in fit with the handlebar and a support surface (202) configured to support the cyclocomputer body (100).

8. The cyclocomputer of claim 7, wherein the cyclocomputer body (100) comprises a display surface (150), a central axis of the fitting hole (201) is parallel to the support surface (202), and the support surface (202) is parallel to the display surface (150).

9. The cyclocomputer of claim 7, wherein the cyclocomputer holder (200) comprises a first frame (210) and a second frame (220), wherein one end of the second frame (220) is rotatably disposed on the first frame (210), and another end of the second frame (220) is detachably connected to the first frame (210).

10. The cyclocomputer of claim 9, wherein the first frame (210) and the second frame (220) are both provided with half holes, wherein the two half holes are encircled to form the fitting hole (201).
